# EUROPÄISCHE PATENTANMELDUNG

(11) **EP 1 914 521 A2**
(43) Veröffentlichungstag der Anmeldung: **23.04.2008**
(21) Anmeldenummer: 07450183.4
(22) Anmeldetag: 16.10.2007
(51) Int. Cl.: G01D 5/24, G01F 1/64, G01F 1/708, G01F 1/74

(54) **Verfahren zur Bestimmung von Teilkapazitäten in kapazitiven Sensoren**

(30) Priorität: 16.10.2006 AT 17172006
(71) Anmelder: Technische Universität Graz, 8010 Graz (AT)
(72) Erfinder: Zangl, Hubert, Dr., 8051 Graz (AT); Fuchs, Anton, Dipl. Ing., 8020 Graz (AT); Bretterklieber, Thomas, Dipl.-Ing., 8501 Lieboch (AT); Brasseur, Georg, Univ.-Prof., 1130 Wien (AT)
(74) Vertreter: Patentanwaltskanzlei Matschnig

(57) **Zusammenfassung**

Verfahren zur Bestimmung von Teilkapazitäten in kapazitiven Sensoren, bei welchem wenigstens zwei Messsignale erzeugt werden, die zueinander phasenverschoben sind, diese Messsignale wenigstens zwei Sendeelektroden zugeführt werden, das an einer Messelektrode empfangene Signal nach I und Q ausgewertet wird und die I und Q Signale einer Auswerteeinheit zugeführt werden, die den Teilkapazitäten zwischen den Sendelektroden und der Messelektrode proportionale Werte bestimmt.

## Beschreibung

Die Erfindung bezieht sich auf ein Verfahren zur Bestimmung von Teilkapazitäten in kapazitiven Sensoren..

Ein bekanntes Verfahren zur Ermittlung von Kopplungskapazitäten in kapazitiven Sensoren ist das Trägerfrequenzverfahren (siehe z.B. "Capacitive Sensors - Design and Application", L.K. Baxter, IEEE Press, 1997). Dabei wird im einfachsten Fall einer Sendeelektrode ein Sendesignal mit einer bestimmten Frequenz (der Trägerfrequenz) zugeführt. Auf einer Empfangselektrode, die niederohmig mit Masse verbunden ist, wird mit geeigneten Verfahren der Strom oder die induzierte Ladung gemessen. Dieser Strom (die Ladung) ist der Größe der Kopplungskapazität proportional. Die Messung des Strom kann dabei so erfolgen, dass sowohl der Anteil I des Stroms, der in Phase mit dem Sendesignal ist, als auch der Anteil Q des Stromes, der gegenüber dem Sendesignal um einen Phasenwinkel φ verschoben ist, bestimmt wird.

Praktische Ausführungsformen kapazitiver Sensoren benutzen zumeist mehrere Elektroden, um beispielsweise Störeinflüsse ausgleichen zu können oder räumliche Auflösung zu ermöglichen. Es ist daher meist erforderlich, dass mehrere Kopplungskapazitäten gemessen werden. Typischerweise werden bei Trägerfrequenzsystemen dazu zeitlich sequentiell einzelne oder mehrere Elektroden mit einem Sendesignal angesteuert und auf anderen Elektroden die empfangenen Signale nacheinander ausgewertet.

Eine schnellere Alternative ist dadurch gegeben, dass mehrere Elektroden in unterschiedlichen Frequenzbereichen angesteuert werden, das heißt, dass mehrere Elektroden mit mehreren Sendesignalen unterschiedlicher Frequenzen gleichzeitig angesteuert werden. Der Nachteil dieses Ansatzes ist ein wesentlich größerer schaltungstechnischer Aufwand, da die Empfängerschaltungen mehrere Frequenzen empfangen und auswerten müssen. Weiters ist es bei kapazitiven Sensoren äußerst wichtig, dass alle Teilkapazitäten unter denselben Rahmenbedingungen ermittelt werden, weil nur dadurch parasitäre Effekte durch Anwendung von ratiometrischen Messverfahren kompensiert werden können. Da bei kapazitiven Sensoren Empfangssignale auch von der Frequenz des Sendesignals abhängen, bringt der Ansatz der Ansteuerung mit unterschiedlichen Frequenzen hier Nachteile mit sich. Befindet sich im Messvolumen ein Medium mit stark frequenzabhängigen Materialeigenschaften, ist diese Alternative ungeeignet.

Mit der vorliegenden Erfindung lässt sich die Geschwindigkeit der kapazitiven Messung verdoppeln, da zwei Sendeelektroden gleichzeitig mit jeweils einem Sendesignal angesteuert werden können und aus den empfangenen Signalen die jeweiligen Teilkapazitäten zu den Sendeelektroden ermittelt werden können.

Die Erfindung löst die Aufgabe in der einfachsten Ausführung dadurch, dass aus einem Hilfssignal H zwei Sendesignale S1 und S2 abgeleitet werden, wobei diese beiden Signale zueinander phasenverschoben sind. Die Richtungen der Signale S1 und S2 sind daher linear unabhängig.

In der Messphase werden die beiden Sendesignale S1 und S2 den jeweiligen Sendeelektroden zugeführt. Aus dem empfangenen Signal wird ein Teil B1, der mit dem Hilfssignal H in Phase liegt, bestimmt. Weiters wird aus dem empfangenen Signal ein Teil B2, der zu einem Hilfssignal H um 90 Grad phasenverschoben ist, bestimmt. Mit Hilfe einer Koordinatentransformation ist es möglich, aus den ermittelten Anteilen B1 und B2 die Kopplungskapazitäten zu den jeweiligen Sendeelektroden zu bestimmen. Die Basisvektoren der Koordinatentransformation sind dabei durch die Phasenbeziehung der Sendesignale S1 und S2 und des Hilfssignals H bestimmt.

In vielen Fällen ist die genaue Phasenbeziehung der beiden Messsignale sowie die Beziehung zum Hilfssignal unbekannt. Die Ursachen liegen beispielsweise in Laufzeitunterschieden oder ungleichen Phasendrehungen aufgrund unterschiedlicher Leitungsimpedanzen, die sich durch unvermeidliche unterschiedliche Leitungsführung ergeben. Die vorliegende Erfindung löst das Problem indem auch solche Signale B1 und B2 bestimmt werden können, die von 0 Grad bzw. 90 Grad abweichende Phasenverschiebungen zum Hilfssignal H aufweisen, solange die beiden Phasenverschiebungen nicht äquivalent sind.

In diesen Fällen wird zunächst in einer Initialisierungsphase nur eines der Sendesignale einer Elektrode zugeführt. Auf der Empfängerseite wird das Signal durch Bestimmung der Anteile B1 und B2 ermittelt und abgespeichert. Im Anschluss daran wird das zweite Sendesignal der zweiten Sendeelektrode zugeführt und auf der Empfängerseite das Signal ebenfalls in B1 und B2 Anteile bestimmt und abgespeichert. Daraus können in einer Auswerteeinheit die benötigten Basisvektoren ermittelt werden. Ein wesentlicher Vorteil dieses Verfahrens gegenüber bekannten Ansätzen ergibt sich dadurch, dass auch bei zeitlichen Veränderungen der Phasenbeziehungen, wie sie durch Drift, Alterung oder andere Umwelteinflüsse entstehen können, durch gelegentliche Wiederholung der Initialisierungsphase eine Bestimmung der Teilkapazitäten möglich bleibt. Es wird lediglich eine Kurzzeitstabilität der Messschaltung gefordert.

Besonders vorteilhaft lässt sich die vorliegende Erfindung in Zusammenhang mit Korrelationsdurchflussmessgeräten anwenden. An einer Förderleitung, in der sich strömende Medien befinden, werden stromauf und stromab Messsignalaufnehmer montiert. Aus dem zeitlichen Versatz der beiden Signale, der mit Hilfe der Kreuzkorrelation ermittelt werden kann, lässt sich bei Kenntnis des Abstandes zwischen den Sensoren die Geschwindigkeit eines Fördergutes bestimmen. Ein besonderer Vorteil ist auch dadurch gegeben, dass eine echte gleichzeitige Messung der beiden Teilkapazitäten erfolgt.

Da ein mehrphasiges, strömendes Medium stets eine Variation in der Verteilung der Dielektrizitätszahl bedeutet, können hier kapazitive Verfahren sehr einfach und kostengünstig verwendet werden. Unter Ausnutzung vorliegender Erfindung kann eine gleichzeitige Messung der stromauf und der stromab liegenden Teilkapazität mit nur einer einzelnen, in Flussrichtung zwischen den beiden Sendeelektroden liegenden Empfangselektrode, erfolgen. Der Vorteil gegenüber der klassischen sequentiellen Messung zweier Teilkapazitäten (siehe "Cross Correlation Flowmeters - Their Design and Application", M.S. Beck, A. Plaskowski, IOP Publishing, 1987 Ltd) ist hier die doppelt so hohe Messrate, der verminderte Schaltungsaufwand sowie der kompakte Sensoraufbau.

Hinsichtlich der Unempfindlichkeit gegenüber äußeren Störern hat es sich gelegentlich als vorteilhaft erwiesen, wenn anstelle des Empfangssignals in einer einzelnen Messelektrode das Differenzsignal zwischen zwei Messelektroden ausgewertet wird. In diesem Fall ist wird das Signal mit einer differentiellen Messkette ausgewertet.

Das Verfahren sowie beispielhafte Ausführungsformen werden in den folgenden Abbildungen näher beschrieben.

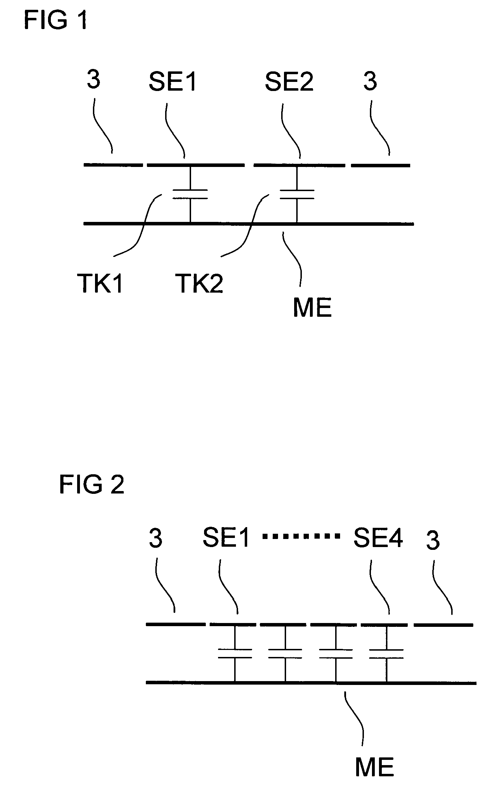

Figur 1 zeigt eine Ersatzdarstellung für kapazitive Sensoren. Es sind zwei Sendeelektroden SE1 und SE2 vorhanden, die mit Messsignalen beaufschlagt werden. Es wird eine gemeinsame Messelektrode ME verwendet. Das Verfahren dient dazu, den Teilkapazitäten TK1 und TK2 proportionale Werte zu erhalten. Mit Hilfe der Formgebung der Elektroden SE1, SE2 und ME sowie der Masseflächen 3 können die räumlichen Empfindlichkeiten der jeweiligen Messaufgabe angepasst werden.

Figur 2 zeigt eine Erweiterung von Figur 1. Es können auch mehrere Sendeelektroden SE1 bis SE4 verwendet werden, die gleichzeitig oder sequentiell oder gemischt angesteuert werden.

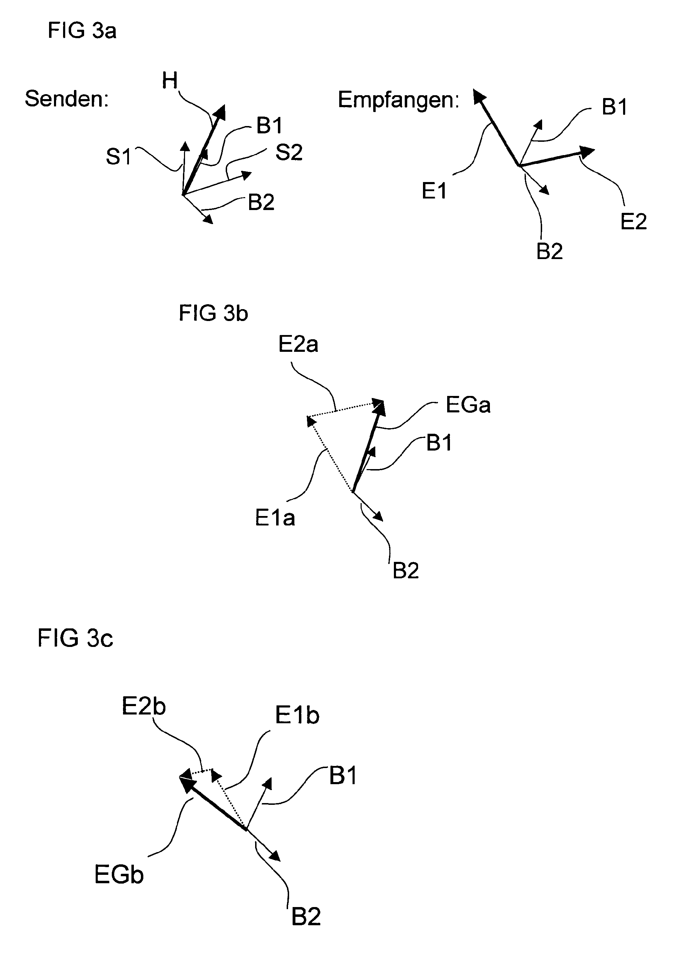

Figur 3 dient der Verdeutlichung des Verfahrens. Wie in Figur 3a ersichtlich werden für das Senden aus einem Hilfssignal H die beiden Sendesignale S1 und S2 abgeleitet, die gleichzeitig an die beiden Sendeelektroden angelegt werden. Aus diesem Hilfssignal H werden ebenfalls die beiden Basisvektoren B1 und B2 abgeleitet, wobei B1 mit H in Phase liegt. Für das Empfangen wird im einfachsten Fall davon ausgegangen, dass im Zeigerdiagram die Richtung eines zu einer Teilkapazität gehörenden Empfangssignals E1 bzw. E2 bekannt sind, die jedoch einen beliebigen Winkel zu den Basisvektoren B1 und B2 eines Demodulators einnehmen können. Figur 3b zeigt, dass ein beliebiger Messwert EGa bei Kenntnis von E1 und E2 in die zu den Teilkapazitäten gehörenden Anteile E1a und E2a aufgetrennt werden kann. E1 und E2 bilden Basisvektoren für ein neues Koordinatensystem. In Figur 3c ist die Aufspaltung für geänderte Teilkapazitäten TK1 und TK2 dargestellt. Da die Basisvektoren als unveränderlich angenommen werden, können die Teilkapazitäten wiederum aus einer einzigen Messung ermittelt werden.

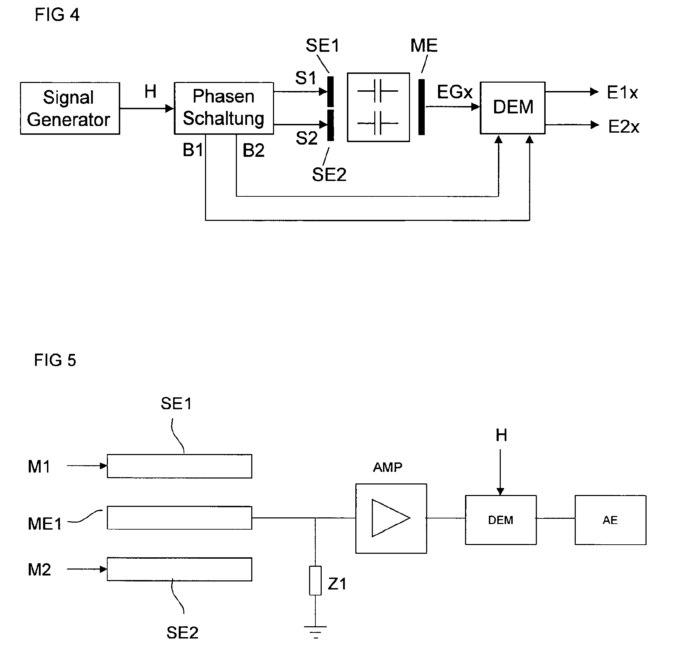

Figur 4 zeigt ein Blockdiagramm, das die Abläufe der Messung wie in vorliegender Erfindung beschrieben zusammenfasst. Ein Hilfssignal H wird mit Hilfe eines Signalgenerators erzeugt. In einer Phasenschaltung werden die Sendesignale S1 und S2 sowie die Basisvektoren B1 und B2 abgeleitet. Die Sendeelektroden SE1 und SE2 werden gleichzeitig mit den Sendesignalen S1 und S2 beaufschlagt. Durch die Geometrie der Anordnung und das zwischen Sende- und Messelektrode (ME) liegende Medium bilden sich zu messende Kapazitäten aus. Der gemessene Strom (Ladung) Egx kann unter Kenntnis der Basisvektoren B1 und B2 in die den Teilkapazitäten proportionale Anteile E1x und E2x zerlegt werden.

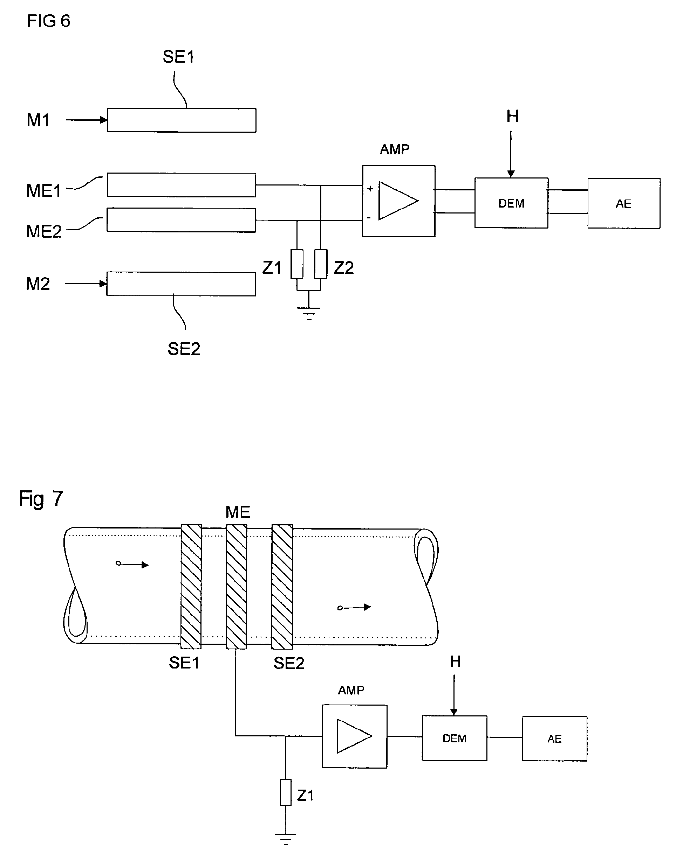

Figur 5 zeigt eine beispielhafte Ausführungsform zur Messung des Empfangssignals. Es hat sich als vorteilhaft gezeigt, dass der Strom durch eine auf festem Potential gehaltenen Messelektrode ME1 erfasst wird. Eine praktische Realisierung, die vor allem im höheren Frequenzbereich ab einigen Megahertz eingesetzt wird, ist die Verwendung von Mess-Shunts gegen Masse, an denen der Spannungsabfall bestimmt wird. Unter der Voraussetzung einer im Vergleich zur Impedanz der zu messenden Teilkapazität kleinen Impedanz Z (zum Beispiel um einen Faktor 100) ist die an Z abfallende Spannung nahezu proportional dem Strom, der gegen Masse bei direkter Verbindung fließen würde. Auf diese Art kann eine zuverlässige Messung erreicht werden. Das Signal kann optional einem Verstärker AMP zugeführt werden, bevor daraus in einem Demodulator DEM in I und Q Anteile bestimmt werden. Diese werden einer Auswerteeinheit AE zugeführt, die daraus den Teilkapazitäten proportionale Werte bestimmt.

Figur 6 zeigt eine beispielhafte Ausführungsform, in der zwei Messelektroden ME1 und ME2 verwendet werden. In diesem Fall ist das Differenzsignal zwischen den beiden, wiederum mittels Mess-Shunt Z1, Z2 mit Masse verbundenen Elektroden, ein günstiges Messsignal. Der optionale Verstärker AMP und der Demodulator DEM sind in diesem Fall differentiell ausgeführt, wodurch die Empfindlichkeit gegenüber äußeren Stören reduziert werden kann.

Figur 7 zeigt eine beispielhafte Ausführungsform zur Nutzung vorliegender Erfindung in der Durchflussmesstechnik. Der zeitliche Verlauf der beiden Teilkapazitäten zwischen SE1 und ME1 sowie zwischen SE2 und ME wird gleichzeitig wie beschrieben ermittelt. Die Änderungen in diesen Teilkapazitäten, die durch das durchfließende Medium verursacht werden, dienen zur korrelativen Bestimmung der Fördergeschwindigkeit.

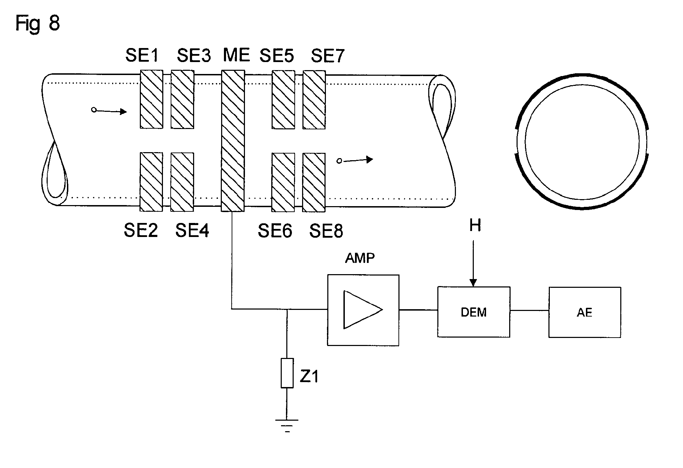

Figur 8 zeigt eine beispielhafte Ausführungsform unter Ausnutzung mehrerer Sendelektroden SE1 bis SE8. Jeweils ein Paar von Sendeelektroden kann dabei gleichzeitig mit Sendesignalen beaufschlagt und zur Messung der Teilkapazitäten verwendet werden. Durch die geometrisch bedingten veränderten Sensitivitäten dieser Ausführung kann eine räumliche Auflösung der Messung erzielt werden.

Da in vielen Fällen außer einer kapazitiven Kopplung auch eine konduktive Kopplung zwischen Sendeelektroden und Empfangselektroden vorliegt ist es vielfach zweckmäßig, anstelle eines der Kapazität proportionalen Wertes einen Wert zu ermitteln, welcher dem komplexen Leitwert, d.h. der Admitanz proportional ist. Im weiteren Sinne werden in diesem Fall somit nicht nur Teilkapazitäten sondern Teiladmitanzen ermittelt.

## Patentansprüche

1. Verfahren zur Bestimmung von Teilkapazitäten in kapazitiven Sensoren, **dadurch gekennzeichnet, dass** wenigstens zwei Messsignale erzeugt werden, die zueinander phasenverschoben sind, diese Messsignale wenigstens zwei Sendeelektroden zugeführt werden, das an einer Messelektrode empfangene Signal nach I und Q ausgewertet wird und die I und Q Signale einer Auswerteeinheit zugeführt werden, die den Teilkapazitäten zwischen den Sendelektroden und der Messelektrode proportionale Werte bestimmt.

2. Verfahren nach Anspruch 1, **dadurch gekennzeichnet, dass** in einer ersten Phase einer ersten Elektrode ein Messsignal zugeführt wird und an einer Messelektrode das empfangene Signal nach I und Q ausgewertet wird und die Werte abgespeichert werden, in einer zweiten Phase einer weiteren Elektrode ein Messsignal, dass gegenüber dem ersten Messsignal phasenverschoben ist, zugeführt wird und an einer Messelektrode das empfangene Signal nach I und Q ausgewertet wird und die Werte abgespeichert werden, in einer dritten Phase, die mehrmals wiederholt werden kann, der ersten Elektrode ein Messsignal und an einer zweiten Elektrode ein Messsignal, welches zum ersten Messsignal eine Phasenverschiebung aufweist, zugeführt wird und an einer Messelektrode das empfangene Signal nach I und Q ausgewertet wird, die Signale einer Auswerteeinheit zugeführt werden, die aus den Messwerten für I und Q den jeweiligen Kopplungskapazitäten zwischen den einzelnen Elektroden und der Messelektrode proportionale Werte ermittelt.

3. Verfahren nach Anspruch 1. oder Anspruch 2 **dadurch gekennzeichnet, dass** die jeweiligen Sendesignale gleichzeitig mehreren Elektroden zugeführt werden.

4. Verfahren nach einem oder mehreren der Ansprüche 1 bis 3 **dadurch gekennzeichnet, dass** das Differenzsignal zwischen zwei Messelektroden ausgewertet wird.

5. Verfahren nach einem oder mehreren der Ansprüche 1. bis 4. **dadurch gekennzeichnet, dass** neben der kapazitiven Kopplung auch konduktive Kopplung zwischen Sendeelektroden und Empfangselektroden vorliegt und anstelle eines der Kapazität proportionalen Wertes ein der jeweiligen Admittanz proportionaler Wert ermittelt wird.

6. Verfahren nach einem oder mehreren der Ansprüche 1. bis 5 **dadurch gekennzeichnet, dass** gleichzeitig zwei Teilkapazitäten, die in einer zur Durchflussmessung geeigneten Anordnung an einer Förderstrecke angebracht sind, bestimmt werden.
